# EUROPEAN PATENT APPLICATION

(11) **EP 2 793 348 A1**
(43) Date of publication of application: **22.10.2014**
(21) Application number: 14153289.5
(22) Date of filing: 30.01.2014
(51) Int. Cl.: H02J 7/00, H02J 7/02

(54) **An Electronic Apparatus and a Method of Controlling Charge**

(30) Priority: 19.04.2013 KR 20130043700
(71) Applicant: Samsung Electronics Co., Ltd, Gyeonggi-do 443-742 (KR)
(72) Inventor: Ha, Jin-soo, Gyeonggi-do (KR); Choi, Yeong-bok, Gyeonggi-do (KR)
(74) Representative: Walaski, Jan Filip

(57) **Abstract**

An electronic apparatus including a battery unit configured to include a battery and to supply power to elements of the electronic apparatus by using power stored in the battery; a power charger configured to, if power is input from an external adaptor, charge (S1010) the battery with the input power; a user interface (UI) unit configured to display (S1020) a charge state of the battery; and a power controller configured to, if the charge state of the battery satisfies a preset first condition, control the UI unit to display (S1040) that the battery has been fully charged and control the power charger to charge the battery until the charge state of the battery satisfies a preset second condition.

## Description

The present invention relates to an electronic apparatus, a method of controlling charge, and a computer-readable recording medium, and more particularly, an electronic apparatus that reduces a charge time of a battery of the electronic apparatus, a method of controlling charge, and a computer-readable recording medium.

A notebook personal computer (PC) refers to a notebook-sized computer that is portable and thus carried and used by a person. A recent notebook PC has an improved processor and an improved graphic performance and thus requires a large amount of power consumption. Therefore, a high capacity battery is installed in the recent notebook PC.

Since the high capacity battery is installed in the notebook PC, as described, it takes a large amount of time to fully charge the high capacity battery. Therefore, there is a need for a method of reducing a charge time of a battery of an electronic apparatus.

The exemplary embodiments of the present general inventive concept provide an electronic apparatus that reduces a charge time of a battery of an electronic apparatus, a method of controlling a charge, and a computer-readable recording medium.

Additional features and utilities of the present general inventive concept will be set forth in part in the description which follows and, in part, will be obvious from the description, or may be learned by practice of the general inventive concept.

The foregoing and/or other features and utilities of the present general inventive concept are achieved by providing an electronic apparatus including a battery unit configured to include a battery and to supply power to elements of the electronic apparatus by using power stored in the battery, a power charger configured to, if power is input from an external adaptor, charge the battery with the input power, a user interface (UI) unit configured to display a charge state of the battery, and a power controller configured to, if the charge state of the battery satisfies a preset first condition, control the UI unit to display that the battery has been fully charged and control the power charger to charge the battery until the charge state of the battery satisfies a preset second condition.

If the charge state of the battery satisfies the preset second condition, the power controller may control the power charger not to charge the battery.

If the charge state of the battery satisfies the preset second condition, the power controller may set a flag indicating that the battery has been fully charged.

If the external adaptor is interrupted from being connected to the electronic apparatus and then re-connected to the electronic apparatus after the charge state of the battery satisfies the preset first condition or the preset second condition, the power controller may determine whether the battery has been charged, according to whether the charge state of the battery satisfies a preset third condition.

If the battery is separated from the electronic apparatus and then re-installed in the electronic apparatus after the charge state of the battery satisfies the preset second condition, the power controller may control the power charger according to whether the charge state of the battery satisfies a preset third condition and controls the power charger to charge the battery if the battery is separated from the electronic apparatus and then re-installed in the electronic apparatus after the charge state of the battery satisfies the preset first condition.

The preset third condition may be that a charge capacity of the battery is 97% or more.

The preset first condition may be that the charge capacity of the battery is 99% or more, and a charge current is lower than or equal to 1.5/20 times an initial charge current. The preset second condition may be that the charge capacity of the battery is 100%, and the charge current is lower than or equal to 1/20 times the initial charge current.

The UI unit may include a light-emitting unit which emits light to indicate that the battery is being charged. If the charge state of the battery satisfies the preset first condition, the power controller may control the UI unit so that the light-emitting unit does not emit the light even if the battery is being charged.

The UI unit may display the charge state of the battery with %, and if the charge state of the battery satisfies the preset first condition and does not satisfy the preset second condition, the power controller may control the UI unit to display a value obtained by adding a preset value to the charge state of the battery.

The power controller may control the UI unit to display the value obtained by adding the preset value to the charge state of the battery until the charge state of the battery satisfies the preset second condition or the battery is discharged due to the separation of the external adaptor after the charge state of the battery satisfies the preset first condition.

The foregoing and/or other features and utilities of the present general inventive concept may also be achieved by providing a method of controlling charging of an electronic apparatus. The method may include sensing a charge state of a battery, displaying the charge state of the battery according to whether the charge state of the battery satisfies a preset first condition, and charging the battery according to whether the charge state of the battery satisfies a preset second condition.

The method may further include, if the charge state of the battery satisfies the preset second condition, setting a flag indicating that the battery has been fully charged.

If an adaptor is interrupted from being connected to the electronic apparatus and then re-connected to the electronic apparatus after the charge state of the battery satisfies the preset first condition or the preset second condition, the battery may be charged according to whether the charge state of the battery satisfies a preset third condition.

If the battery is separated from the electronic apparatus and then re-installed in the electronic apparatus after the charge state of the battery satisfies the preset second condition, the battery may be charged according to whether the charge state of the battery satisfies the preset third condition, and if the battery is separated from the electronic apparatus and then re-installed in the electronic apparatus after the charge state of the battery satisfies the preset first condition, the battery may be charged.

The preset third condition may be that a charge capacity of the battery is 97% or more.

The preset first condition may be that the charge capacity of the battery is 99% or more, and a charge current is lower than or equal to 1.5/20 times of an initial charge current. The preset second condition may be that the charge capacity of the battery is 100%, and the charge current is lower than or equal to 1/20 times of the initial charge current.

A light-emitting unit may be used to emit light in order to display whether the charge is in the charge state.

The charge state of the battery may be displayed with %, and if the charge state of the battery satisfies the preset first condition and does not satisfy the preset second condition, a value obtained by adding a preset value to the charge state of the battery may be displayed.

Until the charge state of the battery satisfies the preset second condition or the battery is discharged due to the separation of the adaptor after the charge state of the battery satisfies the preset first condition, the value obtained by adding the preset value to the charge state of the battery may be displayed.

The foregoing and/or other features and utilities of the present general inventive concept may also be achieved by providing a non-transitory computer-readable recording medium including a program for executing the method described above.

The foregoing and/or other features and utilities of the present general inventive concept may also be achieved by providing an electronic apparatus including a battery, and a power controller to charge the battery in a first mode when a state of charge of the battery is below a preset first condition, and to charge the battery in a second mode when the state of charge of the battery is equal to or above the preset first condition and below a preset second condition.

The power controller may discontinue charging the battery when a charge state of the battery is equal to the preset second condition.

Charging the battery in the first mode may include controlling a light-emitting unit to emit light indicating that the battery is in a charge state and transmitting a current charge capacity of the battery to an operating system.

Charging the battery in the second mode may include controlling a light-emitting unit to stop emitting light so as to indicate that the battery is no longer in a charge state and transmitting a value obtained by adding a preset value to a current charge capacity to an operating system.

These and/or other features and utilities of the present general inventive concept will become apparent and more readily appreciated from the following description of the embodiments, taken in conjunction with the accompanying drawings of which:
FIG. 1 is a block diagram illustrating a structure of an electronic apparatus according to an exemplary embodiment of the present general inventive concept;
FIG. 2 is a block diagram illustrating a detailed structure of a power supply unit of FIG. 1;
FIG. 3 is a graph illustrating a charge state of a battery with respect to a charge time;
FIG. 4 is as view illustrating an operation of a power controller according to a charge state of a battery;
FIG. 5 is a view illustrating an operation of a power controller according to a charge state and a charge mode of a battery if an adaptor is separated from an electronic apparatus;
FIG. 6 is a view illustrating an operation of a power controller according to a charge sate and a charge mode of a battery if an adaptor is separated from an electronic apparatus and then re-connected to the electronic apparatus;
FIG. 7 is a view illustrating an operation of a power controller according to a charge state and a charge mode of a battery if the battery is separated from an electronic apparatus and then re-installed in the electronic apparatus;
FIG. 8 is a view illustrating an operation of a power controller if an adaptor is separated from an electronic apparatus, and thus a battery is discharged;
FIG. 9 is a view illustrating a charge time according to an exemplary embodiment of the present general inventive concept; and
FIG. 10 is a flowchart illustrating a method of controlling a charge according to an exemplary embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

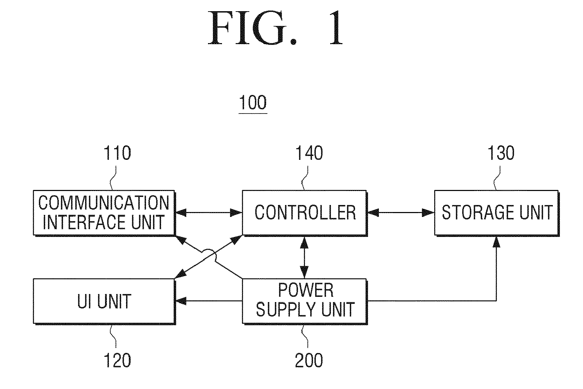

FIG. 1 is a block diagram illustrating a structure of an electronic apparatus 100 according to an exemplary embodiment of the present general inventive concept.

Referring to FIG. 1, the electronic apparatus 100 includes a communication interface unit 110, a user interface (UI) unit 120, a storage unit 130, a controller 140, and a power supply unit 200. Here, the electronic apparatus 100 may be a notebook personal computer (PC), a tablet PC, a portable multimedia player (PMP), an MP3, a smart phone, or the like.

The electronic apparatus 100 has a plurality of operation modes. Here, the plurality of operation modes include a normal mode in which all elements of the electronic apparatus 100 operate and a sleep mode in which the elements of the electronic apparatus 100 operate at lower power consumption than in the normal mode. The electronic apparatus 100 has only one sleep mode in the present exemplary embodiment but may include a plurality of sleep modes.

The electronic apparatus 100 has a plurality of charge modes. Here, the plurality of charge modes include first, second, and third charge modes. In the first charge mode, a charge state of a battery has satisfied a preset first condition when the battery is being charged. In second charge mode, the charge state of the battery satisfies the preset first condition and does not satisfy a preset second condition when the battery is being charged. In the third charge mode, the charge state of the battery satisfies a preset third condition when the battery is being charged.

Here, the preset condition is determined in consideration of a charge capacity and a charge current of the battery. Therefore, in the preset first condition, the charge capacity of the battery is 99% or more, and the charge current is lower than or equal to, for example, 1.5/20 times an initial charge current. The initial charge current being the charge current that is first supplied to the battery upon connection with an external adaptor 10. Also, in the preset second condition, the charge capacity of the battery is 100%, and the charge current is lower than or equal to, for example, 1/20 times the initial charge current. Further, in the preset third condition, the charge capacity of the battery is 97% or more, for example.

In the present exemplary embodiment, the preset condition is determined in consideration of the charge capacity and the charge current. However, only the charge capacity may be used or only the charge current may be used. The numerical values of the above-described preset first, second, and third conditions are only exemplary and are not limited thereto. For example, the charge capacity of the preset first condition may be selectively used within a range, for example, between 90% and 99%. The charge current of the preset first condition may be selectively used within a range, for example, between 1/5 times and 1/19 times of an initial charge current.

The communication interface unit 110 is formed to connect the electronic apparatus 100 to an external apparatus through a local area network (LAN) and the Internet or through a wireless communication method (for example, a wireless communication such as GSM, UMTS, LTE, WiBRO, or the like).

The UI unit 120 may include a plurality of functional keys through which a user may set or select various functions supported by the electronic apparatus 100 and may display various types of information provided by the electronic apparatus 100. The UI unit 120 may be realized as an apparatus that may simultaneously realize an input and an output like a touch screen or the like, as an apparatus that is realized through a combination of a mouse and a monitor, or any apparatus that communicates with a user via a UI screen and/or a light-emitting unit.

The UI unit 120 may display the charge state of the battery. In detail, the UI unit 120 may display that the battery has been fully charged, by using a light-emitting unit such as a light-emitting diode (LED). The UI unit 120 may also display that the battery is currently fully charged on a UI screen.

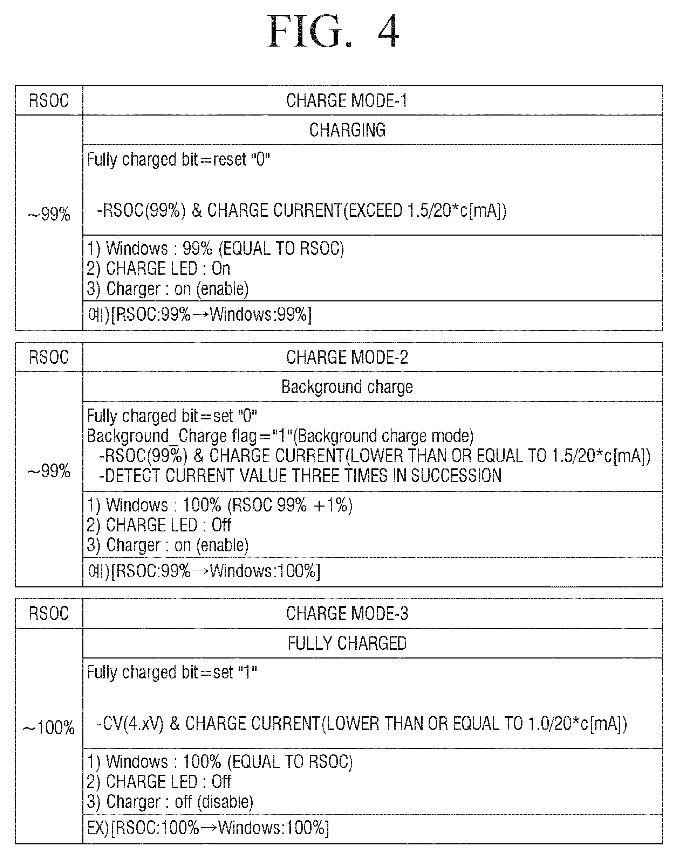

The UI unit 120 may display information about a power state. In detail, the UI unit 120 may display power state information to a user indicating whether an adaptor has been connected, whether the battery has been installed, the charge state of the battery, and the like. In detail, the UI unit 120 may display whether the battery is currently being charged or has been fully charged on a light-emitting unit such as the LED or the UI screen. The UI unit 120 may display a charge capacity of the battery. The charge state and the charge capacity displayed by the UI unit 120 may be changed according to a charge mode of the electronic apparatus 100. This will be described later with reference to FIGS. 4 through 8.

The storage unit 130 stores a program to drive the electronic apparatus 100. In detail, the storage unit 130 may store a program that is a set of various types of commands necessary to drive the electronic apparatus 100. Here, the program includes an application program to provide a particular service and an operation program to drive the application program. The storage unit 130 may be realized as an internal storage medium of the electronic apparatus 100 or an external storage medium, for example, a removable disk including a universal serial bus (USB) memory, a web server through a network, or the like.

The controller 140 controls elements of the electronic apparatus 100. In detail, the controller 140 may control the UI unit 120 to receive power state information of a battery regarding whether the adaptor 10 has been connected, whether the battery has been installed, the charge state of the battery, or the like, and, in response to the received power state information, the controller 140 may control the UI unit 120 to display the received power state information.

The controller 140 determines an operation mode of the electronic apparatus 100. In detail, if there is no input of the user for a preset time, or an operation is not performed for a preset time, the controller 140 may determine the operation mode of the electronic apparatus 100 as a sleep mode. In addition, the controller 140 may also determine the operation mode of the electronic apparatus 100 according to a battery state of the electronic apparatus 100. In detail, if the charge capacity of the battery of the electronic apparatus 100 is lower than a preset residual capacity (for example, 5%), the controller 140 may determine the operation mode of the electronic apparatus 100 as the sleep mode.

The controller 140 may control the elements of the electronic apparatus 100 according to the determined operation mode. In detail, if the determined operation mode is a normal mode, the controller 140 may control the power supply unit 200 to supply power to all the elements of the electronic apparatus 100. Alternatively, if the determined operation mode is the sleep mode, the controller 140 may control the power supply unit 200 to supply power only to pre-selected elements of the electronic apparatus 100.

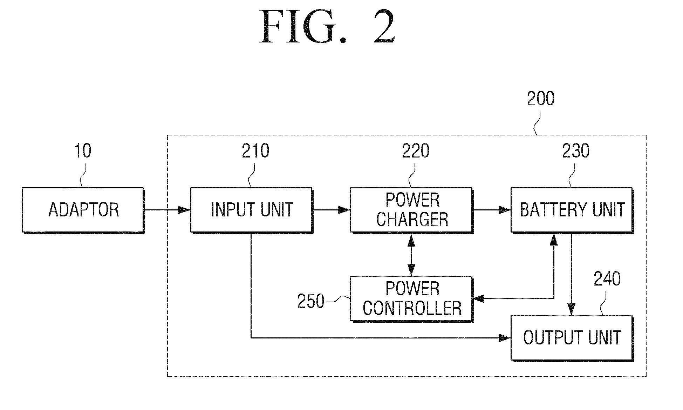

The power supply unit 200 supplies power to the elements of the electronic apparatus 100. Detailed structure and operation of the power supply unit 200 will now be described with reference to FIG. 2.

FIG. 2 is a block diagram illustrating a detailed structure of the power supply unit 200 of FIG. 1.

Referring to FIG. 2, the power supply unit 200 includes an input unit 210, a power charger 220, a battery unit 230, an output unit 240, and a power controller 250.

The input unit 210 receives direct current (DC) power from an external adaptor 10.

If the input unit 210 receives power from the external adaptor 10, the power charger 220 charges a battery of the battery unit 230 by using the received power.

The battery unit 230 includes the battery that is a secondary battery and may charge the secondary battery with the DC power received from the input unit 210 through the power charger 220. Here, the secondary battery may be a nickel battery, a cadmium battery, a nickel-cadmium battery, a nickel-hydride battery, a lithium ion battery, a lithium ion polymer battery, or the like. The power charger 220 may supply power to the elements of the electronic apparatus 100.

The output unit 240 supplies power to the elements of the electronic apparatus 100. In detail, the output unit 240 may selectively supply power input through the input unit 210 or power of the power charger 220 to the elements of the electronic apparatus 100. Alternatively, the output unit 240 may supply both of the power input through the input unit 210 and the power of the power charger 220 to the elements of the electronic apparatus 100.

The power controller 250 senses whether the DC power has been input from the external adaptor 10 and provides the sensed result and state information of the battery unit 230 to the controller 140. In detail, the power controller 250 may sense a voltage value of the DC power input into the input unit 210 and, if the sensed voltage value of the DC power fails to be lower than a preset value, the power controller 250 senses that the DC power has not been input from the external adaptor 10.

The power controller 250 may control the power charger 220 to charge the battery unit 230 by using the power input through the input unit 210 according to a charge state of the battery unit 230. If the charge state of the battery unit 230 (or the battery) does not satisfy a preset second condition, the power controller 250 may control the power charger 220 to charge the battery unit 230 by using the DC power input through the input unit 210.

The power controller 250 may control the power charger 220 such that the power charger 220 does not charge the battery unit 230, even when DC power is input through the input unit 210, if (1) the charge state of the battery satisfies a preset second condition, (2) the charge state of the battery satisfies a preset third condition when the charge state of the battery satisfies a preset first condition or the preset second condition and the external adaptor 10 is interrupted from being connected to the electronic apparatus 100 or is connected to the electronic apparatus 100, and/or (3) the charge state of the battery satisfies the preset third condition when the charge state of the battery satisfies the preset second condition and the battery is separated from the electronic apparatus 100 and then is re-installed in the electronic apparatus 100. A detailed operation of the power controller 250 described above will be described later with reference to FIGS. 4 through 7.

The power controller 250 may control the UI unit 120 to display the charge state of the battery unit 230 according to the charge state of the battery unit 230. In detail, if the battery unit 230 is in the charge state, the power controller 250 may control the UI unit 120 to display the charge state of the battery unit 230. If the charge state of the battery unit 230 satisfies the preset first condition, the battery unit 230 may control the UI unit 120 to display that the battery unit 230 has been fully charged even if the battery unit 230 is in the charge state. A display control operation of the power controller 250 as described above will be described later with reference to FIGS. 4 through 8. The power controller 250 may be realized as a system microcomputer.

The power controller 250 controls the UI unit 120 in the present exemplary embodiment, but the present general inventive concept is not limited thereto. For example, the controller 140 may receive information about a power state and control the UI unit 120 according to the information.

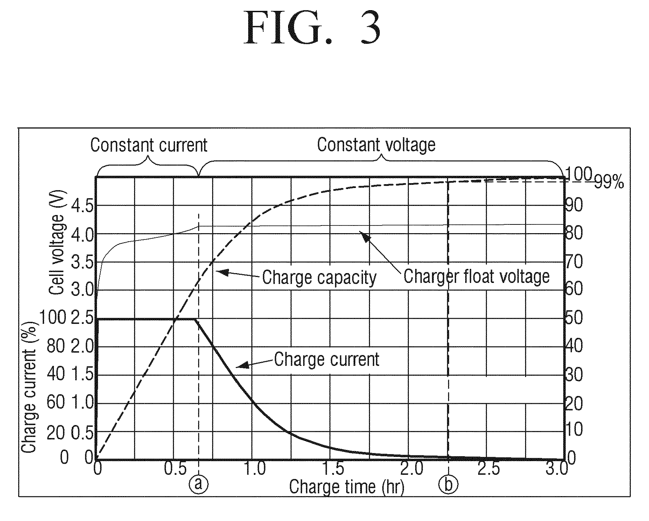

FIG. 3 is a graph illustrating a charge state of a battery with respect to a charge time. In detail, FIG. 3 is a graph illustrating a charge voltage (i.e., charger float voltage), a charge current, and a charge capacity of a battery with time according to a method of charging a constant voltage and a constant current, wherein the method may be used to charge a secondary battery.

Referring to FIG. 3, when the battery is discharged a lot, i.e., the battery is initially charged in a state that the charge capacity of the battery is minimal, the battery is charged with the constant current. After the battery is charged to some degree, i.e., at a time a, the charge voltage becomes the constant voltage. Since the charge voltage is changed into the constant voltage as described above, the battery is prevented from being overcharged.

Since the charge current is reduced as time passes after the time a, changes of the charge capacity are gradually reduced with the reduction in the charge current. In detail, the charge capacity is increased to 50% between o minute and 30 minutes but only charges 33% more between 30 minutes and 1 hour and only charges 12% more between 1 hour and 1 and a half hours. One and a half hours are taken to increase the charge capacity from 0% to 95%, but 1 and a half hours are taken to fully charge the battery, i.e., to charge the battery with residual capacity 5%.

Therefore, in the present exemplary embodiment of the present general inventive concept, if the charge state of the battery satisfies a preset first condition, a full charge state of the battery is displayed to continuously charge the battery until the battery is fully charged even if the battery is not fully charged (i.e., the charge state of the battery does not satisfy a preset second condition).

The full charge state of the battery may be pre-displayed, as described above, to maximally reduce a charge speed of the battery felt by a user. That is, by indicating that the battery is fully charged prematurely, the amount of time it takes to charge the battery may be reduced. Also, although the user separates an adaptor from an electronic apparatus according to the full charge state of the battery, a difference in the charge capacity is only a preset condition (about 1%), and thus a reduction in a use time of the battery is not great. That is, since the battery is indicated as being fully charged according to a preset condition (about 99% charged), the reduction in the amount of time a user may utilize the battery before the battery requires recharging, when compared to a battery having 100% charge, is minimal. As a result, the reduction in the use time of the battery before the battery depletes its charge may be minimized, and the amount of time it takes to charge the battery may be maximally reduced.

An operation of the power controller 250 will now be described based on the above-described contents.

FIG. 4 is a view illustrating an operation of the power controller 250 according to a relative state of charge (RSOC) of a battery.

Referring to FIG. 4, in a first charge mode, a fully charged bit, indicating that the battery has been fully charged, has a value of 0, a charge capacity is lower than 99%, and a charge current exceeds 1.5/20 times of an initial charge current. Therefore, the power controller 250 controls the power charger 220 to perform charging, controls a light-emitting unit to perform light-emission indicating that the battery is in a charge state, and transmits a current charge capacity of the battery to an operating system (OS).

In a second charge mode, if the charge capacity is increased to 99% or more due to charging of the battery, and the charge current is lower than or equal to 1.5/20 times of the initial charge current, the power controller 250 determines a background charge mode (the second charge mode) and sets the background charge mode to a background charge flag. If the background charge flag is set, the power controller 250 controls the power charger 220 to continuously perform charging, controls the light-emitting unit to stop the light-emission indicating that the battery is in the charge sate, i.e., notifies the light-emitting unit that the battery has been fully charged, and transmits a value, which is obtained by adding a preset value (for example, 1) to the current charge capacity of the battery, to the OS. Here, the preset value refers to 100%, i.e., a charge capacity necessary for entering the second charge mode.

In a third charge mode, i.e., if the charge capacity of the battery is increased to 100% due to charging of the battery, and the charge current is lower than or equal to 1/20 times of the initial charge current, the power controller 250 determines that the battery has been fully charged and controls the power charger 220 to discontinue the charging of the battery. The power controller 250 may control the light-emitting unit to stop the light-emission indicating that the battery is in the charge state. (However, since the light-emitting unit has already stopped the light-emission in the second charge mode, the power controller 250 may control the light-emitting unit to continuously stop the light-emission.) The power controller 250 may set the fully charged bit, indicating that the battery has been fully charged, to 1 and transmit the current charge capacity of the battery to the OS.

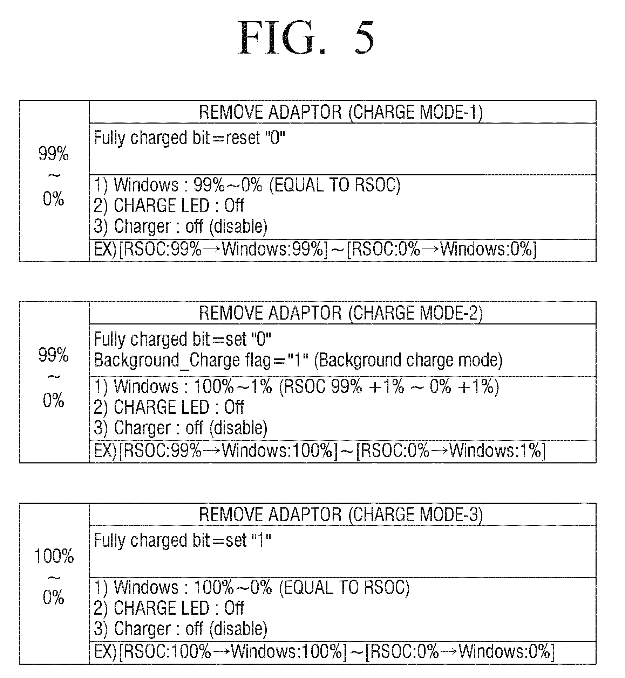

FIG. 5 is a view illustrating an operation of the power controller 250 according to a charge state and a charge mode of a battery if the adaptor 10 is separated from the electronic apparatus 100.

Referring to FIG. 5, since the adaptor 10 is not connected to the electronic apparatus 100, a charging operation is not performed, and a charge state of the battery is not displayed in first, second, and third charge modes. The power controller 250 transmits a current charge capacity of the battery to an OS. However, in the second charge mode, the power controller 250 may add a preset value to a charge capacity of the battery and transmit the charge capacity to which the preset value has been added, as described with reference to FIG. 4.

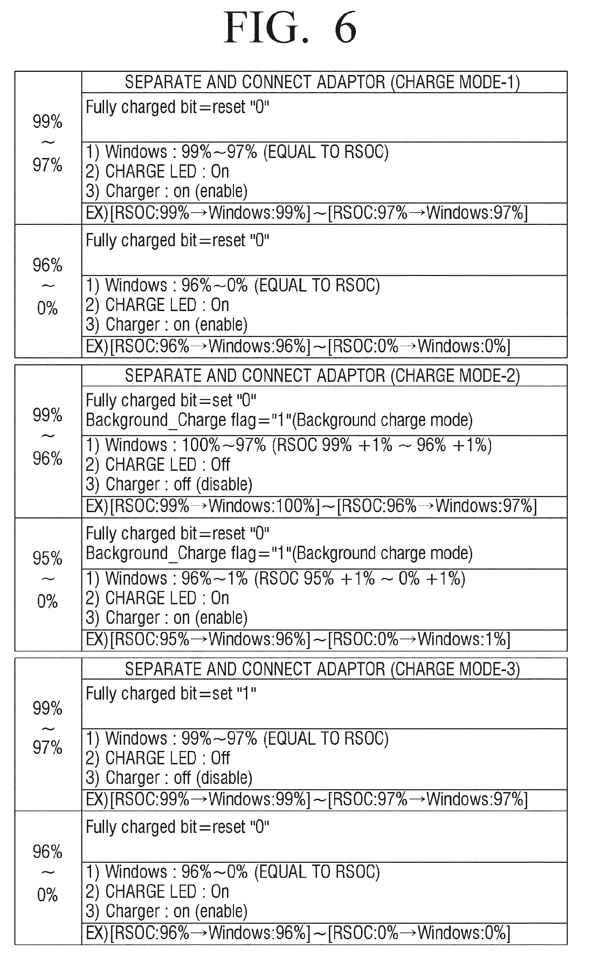

FIG. 6 is a view illustrating an operation of a power controller according to a charge state and a charge mode of a battery if the adaptor 10 is separated from the electronic apparatus 100 and then is re-connected to the electronic apparatus 100.

Referring to FIG. 6, if the adaptor 10 is separated from the electronic apparatus 100 and then re-connected to the electronic apparatus 100 in a first charge mode, a charge state of the battery is lower than 99%. Therefore, the power controller 250 controls the power charger 220 to perform charging, controls a light-emitting unit to perform a light-emission indicating that the battery is in a charge state, and transmits a current charge capacity of the battery to an OS.

If the adaptor 10 is separated from the electronic apparatus 100 and then re-connected to the electronic apparatus 100 in a second charge mode, the power controller 250 determines whether the charge state of the battery satisfies a preset first condition and a preset third condition (e.g., the charge capacity is 97% or more). If the charge state of the battery satisfies the preset third condition, the power controller 250 may determine that chargingis unnecessary, may control the light-emitting unit so that it does not display the light-emission indicating that the battery is in the charge state, and may control the power charger 220 not to perform charging. Here, power controller 250 may transmit a value, which is obtained by adding a preset value (for example, 1) to the charge capacity of the battery, to the OS. Alternatively, if the charge state of the battery does not satisfy the preset third condition, the power controller 250 may determine that charging is necessary, may control the light-emitting unit to display the light-emission indicating that the battery is in the charge state, and may control the power charger 220 to perform charging.

If the adaptor 10 is separated from the electronic apparatus 100 and then re-connected to the electronic apparatus 100 in the third charge mode, the power controller 250 determines whether the charge state of the battery satisfies the preset second condition and the preset third condition (e.g., the charge capacity is 97% or more). If the charge state of the battery satisfies the preset third condition, the power controller 250 may determine that charging is unnecessary to control the light-emitting unit not to display the light-emission indicating that the battery is in the charge state and control the power charger 220 not to perform charging. The power controller 250 may transmit a charge capacity of the battery to the OS. If the charge state of the battery does not satisfy the preset third condition, the power controller 250 may determine that charging is necessary to control the light-emitting unit to display the light-emission indicating that the battery is in the charge state and control the power charger 220 to perform charging.

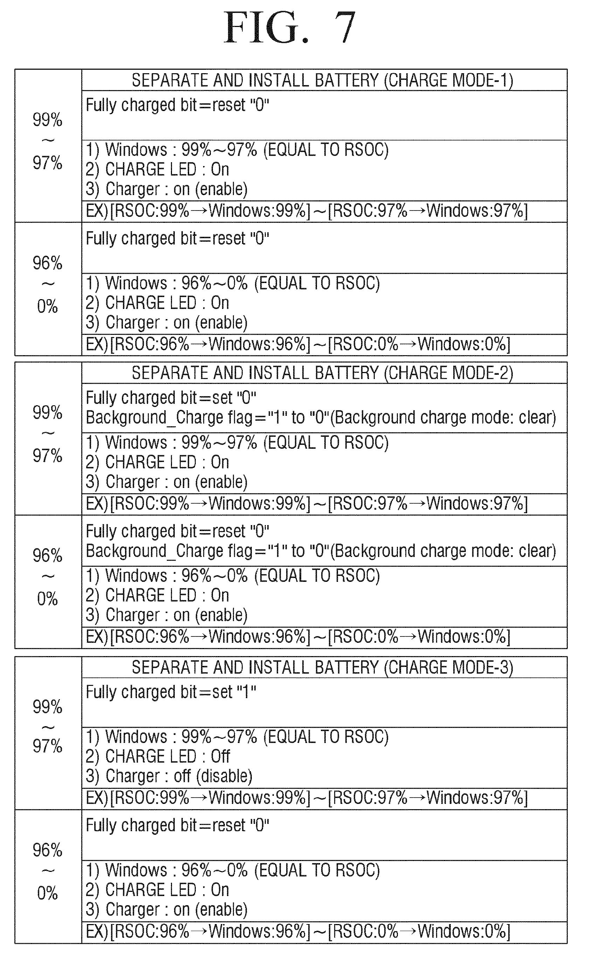

FIG. 7 is a view illustrating an operation of the power controller 250 according to a charge state and a charge mode of a battery if the battery is separated from the electronic apparatus 100 and then re-installed in the electronic apparatus 100.

Referring to FIG. 7, if the battery is separated from the electronic apparatus 100 and then re-installed in the electronic apparatus 100 in a first charge mode, a charge capacity of the battery is 99% or less. Therefore, the power controller 250 controls the power charger 220 to perform charging, controls a light-emitting unit to perform a light-emission indicating that the battery is in the charge state, and transmits a current charge capacity of the battery to an OS.

If the battery is separated from the electronic apparatus 100 and then re-installed in the electronic apparatus 100 in a second charge mode, the power controller 250 may determine that charging is necessary, control the light-emitting unit to display the light-emission indicating that the battery is in the charge state, and control the power charger 220 to perform charging.

It should be noted that the above operation is different from the operation of FIG. 6 in which the adaptor 10 is separated from the electronic apparatus 100 and then re-connected to the electronic apparatus 100 in the second charge mode. This is at least due to the fact that, if the battery is separated from the electronic apparatus 100 and then re-installed in the electronic apparatus 100, it is difficult to determine whether the corresponding battery has been re-connected or a different battery has been connected. In other words, only flag information indicating that the battery has been fully charged is recorded in the battery, and if the battery is separated from the electronic apparatus 100 in the second charge mode, the battery may only have a flag value indicating that the battery has not been fully charged. Therefore, a charging operation is performed as in the first charge mode.

If the battery is separated from the electronic apparatus 100 and then re-installed in the electronic apparatus 100 in a third charge mode, the power controller 250 determines whether the charge state of the battery satisfies the preset second condition and satisfies the preset third condition (e.g., the charge capacity is 97% or more). If the charge state of the battery satisfies the preset third condition, the power controller 250 may determine that charging is unnecessary, may control the light-emitting unit not to display the light-emission indicating that the battery is in the charge state, and may control the power charger 220 not to perform charging. Here, the power controller 250 may transmit a current charge capacity of the battery to the OS. If the charge state of the battery does not satisfy the preset third condition, the power controller 250 may determine that charging is necessary, may control the light-emitting unit to display the light-emission indicating that the battery is in the charge state, and may control the power charger 220 to perform charging.

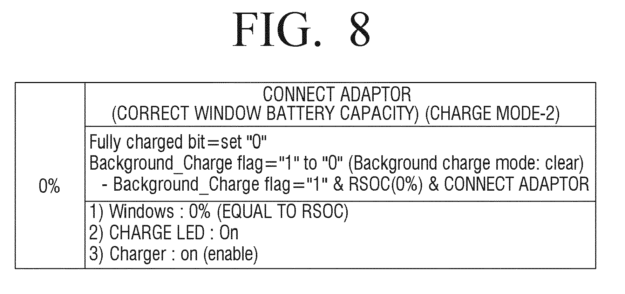

FIG. 8 is a view illustrating an operation of the power controller 250 if the battery is fully discharged and the adaptor 10 was previously separated from the electronic apparatus 100 when charging in the second charge mode.

Referring to FIG. 8, in a second charge mode, the power controller 250 transmits a value, which is obtained by adding a preset value to a charge capacity of the battery, to an OS. Therefore, if the adaptor 10 is separated from the electronic apparatus 100 when charging in the second charge mode, and then the battery becomes fully discharged, the power controller 250 performs an initialization operation so that the value transmitted to the OS becomes the charge capacity of the battery when the adaptor 10 is re-connected to the electronic apparatus 100.

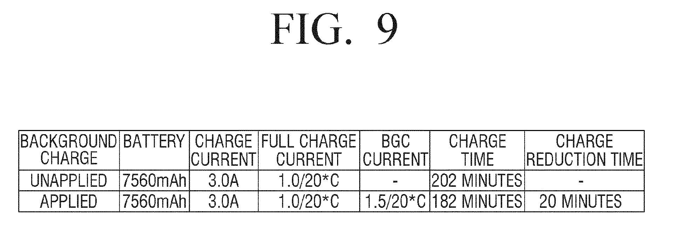

FIG. 9 is a view illustrating a charge time according to an exemplary embodiment of the present general inventive concept.

Referring to FIG. 9, if a charging method according to the present general inventive concept is used, the charge time may be reduced by about 20 minutes.

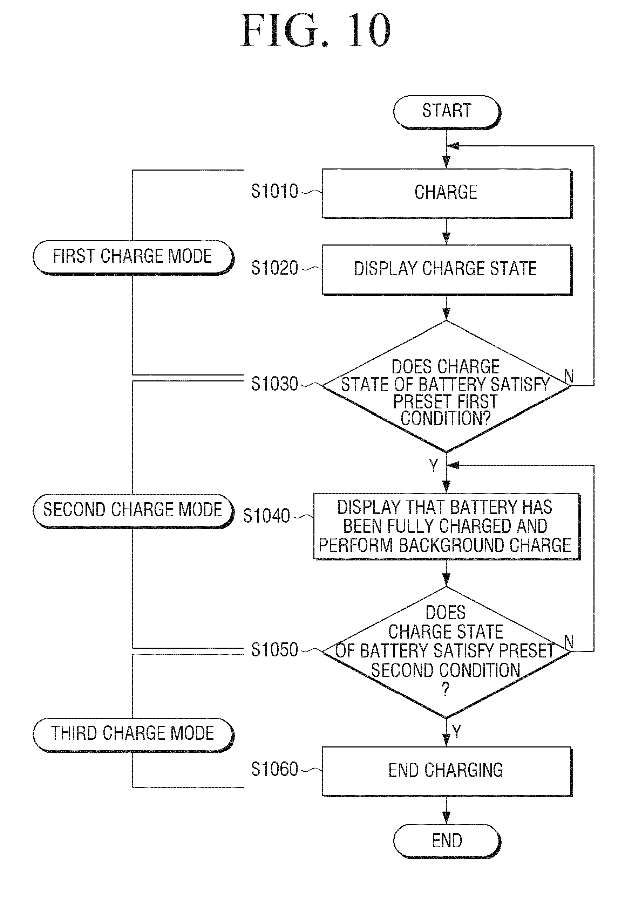

FIG. 10 is a flowchart illustrating a method of controlling a charge according to an exemplary embodiment of the present general inventive concept.

Referring to FIG. 10, a charge state of a battery is sensed, and a determination is made as to whether the charge state of the battery satisfies a preset first condition in operation S1030.

If it is determined in operation S1030 that the charge state of the battery does not satisfy the preset first condition, the battery is charged in a first charge mode in operation S1010, and the charge state of the battery is displayed in operation S1020.

If it is determined in operation S1030 that the charge state of the battery satisfies the preset first condition, a determination is made as to whether the sensed charged state of the battery satisfies a preset second condition in operation S1050.

If it is determined in operation S1050 that the charge state of the battery does not satisfy the preset second condition, the charge state of the battery is kept in a second charge mode to display that the battery has been fully charged while performing background charge of the battery in operation S1040.

If it is determined in operation S1050 that the charge state of the battery satisfies the preset second condition, charging of the battery stops, and a flag, indicating that the battery has been fully charged, is set in operation S1060.

The above-described method according to the present general inventive concept has an effect of both minimizing a reduction in an amount of time the battery may be used without requiring further charging while significantly reducing the amount of time it takes to charge the battery. The method as illustrated in FIG. 10 may be performed in an electronic apparatus having the structure of FIG. 1 or electronic apparatuses having other types of structures, so long as the electronic apparatus includes a rechargeable battery.

A method of controlling a charge as described above may be realized as a program (or an application) including an executable algorithm that may be executed in a computer. The program may be stored and provided on a non-transitory computer-readable medium.

The non-transitory computer-readable medium generally refers to a medium which does not store data for a short time such as a register, a cache memory, a memory, or the like but semi-permanently stores data and is readable by a device. In detail, the above-described applications or programs may be stored and provided on a non-transitory computer readable medium such as a CD, a DVD, a hard disk, a blue-ray disk, a universal serial bus (USB), a memory card, a ROM, or the like.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the present invention, the scope of which is defined in the appended claims.

## Claims

1. An electronic apparatus comprising:
a battery unit having a battery to supply power to elements of the electronic apparatus by using power stored in the battery;
a power charger arranged to, if power is input from an external adaptor, charge the battery with the input power;
a user interface UI unit arranged to display a charge state of the battery; and
a power controller arranged to, if the charge state of the battery satisfies a preset first condition, control the UI unit to display that the battery has been fully charged and control the power charger to charge the battery until the charge state of the battery satisfies a preset second condition.

2. The electronic apparatus of claim 1, wherein if the charge state of the battery satisfies the preset second condition, the power controller controls the power charger not to charge the battery.

3. The electronic apparatus of claim 1 or 2, wherein if the charge state of the battery satisfies the preset second condition, the power controller sets a flag indicating that the battery has been fully charged.

4. The electronic apparatus of any one of the preceding claims, wherein if the external adaptor is interrupted from being connected to the electronic apparatus and then re-connected to the electronic apparatus after the charge state of the battery satisfies the preset first condition or the preset second condition, the power controller determines whether the battery has been charged, according to whether the charge state of the battery satisfies a preset third condition.

5. The electronic apparatus of any one of claims 1 to 3, wherein if the battery is separated from the electronic apparatus and then re-installed in the electronic apparatus after the charge state of the battery satisfies the preset second condition, the power controller controls the power charger according to whether the charge state of the battery satisfies a preset third condition and controls the power charger to charge the battery if the battery is separated from the electronic apparatus and then re-installed in the electronic apparatus after the charge state of the battery satisfies the preset first condition.

6. The electronic apparatus of claim 4 or 5, wherein the preset third condition is that a charge capacity of the battery is 97% or more.

7. The electronic apparatus of any one of the preceding claims, wherein:
the preset first condition is that the charge capacity of the battery is 99% or more, and a charge current is lower than or equal to 1.5/20 times an initial charge current; and
the preset second condition is that the charge capacity of the battery is 100%, and the charge current is lower than or equal to 1/20 times the initial charge current.

8. The electronic apparatus of any one of the preceding claims, wherein the UI unit comprises a light-emitting unit which emits light to indicate that the battery is being charged,
wherein if the charge state of the battery satisfies the preset first condition, the power controller controls the UI unit so that the light-emitting unit does not emit the light even if the battery is being charged.

9. The electronic apparatus of any one of the preceding claims, wherein the UI unit displays the charge state of the battery with a percentage, and if the charge state of the battery satisfies the preset first condition and does not satisfy the preset second condition, the power controller controls the UI unit to display a value obtained by adding a preset value to the charge state of the battery.

10. The electronic apparatus of claim 9, wherein the power controller controls the UI unit to display the value obtained by adding the preset value to the charge state of the battery until the charge state of the battery satisfies the preset second condition or the battery is discharged due to the separation of the external adaptor after the charge state of the battery satisfies the preset first condition.

11. A method of controlling charging of an electronic apparatus, the method comprising:
sensing a charge state of a battery;
displaying the charge state of the battery according to whether the charge state of the battery satisfies a preset first condition; and
charging the battery according to whether the charge state of the battery satisfies a preset second condition.

12. The method of claim 11, further comprising:
if the charge state of the battery satisfies the preset second condition, setting a flag indicating that the battery has been fully charged.

13. The method of claim 11 or 12, wherein if an adaptor is interrupted from being connected to the electronic apparatus and then re-connected to the electronic apparatus after the charge state of the battery satisfies the preset first condition or the preset second condition, the battery is charged according to whether the charge state of the battery satisfies a preset third condition.

14. The method of any one of claims 11 or 12, wherein if the battery is separated from the electronic apparatus and then re-installed in the electronic apparatus after the charge state of the battery satisfies the preset second condition, the battery is charged according to whether the charge state of the battery satisfies a preset third condition, and if the battery is separated from the electronic apparatus and then re-installed in the electronic apparatus after the charge state of the battery satisfies the preset first condition, the battery is charged.

15. The method of any one of claims 11 to 14, wherein the charge state of the battery is displayed with percentage, and if the charge state of the battery satisfies the preset first condition and does not satisfy the preset second condition, a value obtained by adding a preset value to the charge state of the battery is displayed.
